# EUROPÄISCHE PATENTANMELDUNG

(11) **EP 1 614 489 A1**
(43) Veröffentlichungstag der Anmeldung: **11.01.2006**
(21) Anmeldenummer: 05013308.1
(22) Anmeldetag: 21.06.2005
(51) Int. Cl.: B22D 2/00, G01K 1/12

(54) **Behälter für Matallschmelze sowie Verwendung des Behälters und Verfahren zur Ermittlung einer Grenzfläche**

(30) Priorität: 05.07.2004 DE 102004032561
(71) Anmelder: Heraeus Electro-Nite International N.V., 3530 Houthalen (BE)
(72) Erfinder: Kendall, Martin, 3500 Hasselt (BE)
(74) Vertreter: Kühn, Hans-Christian

(57) **Zusammenfassung**

Die Erfindung betrifft einen Behälter für Metallschmelze mit einer in einer Öffnung einer Behälterwand angeordneten Temperaturmesseinrichtung, wobei die Temperaturmesseinrichtung eine in den Behälter ragende, an ihrem im Behälter angeordneten Ende geschlossene Schutzhülle (2) und ein in einer Öffnung der Schutzhülle angeordnetes Temperaturmesselement (3) aufweist und besteht darin, dass die Schutzhülle hitzebeständiges Metalloxid und Graphit aufweist und dass das geschlossene Ende mindestens 50 mm von der Behälterwand beabstandet ist.

## Beschreibung

Die Erfindung betrifft einen Behälter für Metallschmelze mit einer in einer Öffnung einer Behälterwand angeordneten Temperaturmesseinrichtung, wobei die Temperaturmesseinrichtung eine in den Behälter ragende, an ihrem im Behälter angeordneten Ende geschlossene Schutzhülle und ein in einer Öffnung der Schutzhülle angeordnetes Temperaturmesselement aufweist. Des weiteren betrifft die Erfindung die Verwendung des Behälters sowie ein Verfahren zur Ermittlung einer Grenzfläche zwischen zwei übereinander liegenden in einem Behälter angeordneten Materialien, insbesondere zwischen einer Schlackeschicht und darunter angeordneter Stahlschmelze.

Derartige Behälter sind aus dem Stand der Technik bekannt. Beispielsweise ist aus dem deutschen Gebrauchsmuster GM 7228088 bekannt, ein Thermoelement in einer Wand einer Stahlpfanne anzuordnen. Das Thermoelement ist in einem Stahlrohr angeordnet, welches von einer keramischen Schutzschicht umgeben ist. DE 1 054 735 offenbart einen Schmelztiegel für Metalle, in dessen Wand ein Temperaturfühler eingesetzt ist. Der Temperaturfühler weist ein Schutzrohr aus einem metallkeramischen Werkstoff wie Molybdän und Aluminiumoxid auf. Das Schutzrohr ragt mit seiner Spitze etwa 25 mm in die Seite des Tiegelraum hinein. US 3,610,045 offenbart einen Schmelztiegel für eine Eisenschmelze, in dessen Seitenwand ein Thermoelement angeordnet ist. Das Thermoelement ist durch eine konische Schutzhülle aus Aluminiumoxid und Siliziumoxid geschützt. Ein ähnlicher Behälter ist aus EP 314 807 B1 bekannt. Auch in diesem Behälter ist ein Thermoelement durch die Wand hindurchgeführt ins Innere des Behälters hinein. Das Thermoelement ist geschützt durch ein Aluminiumoxidröhrchen, welches wiederum im Inneren des Behälters von einer Bornitritschutzhülle umgeben ist.

Aus US 6,309,442 B1 ist ein Behälter für Metallschmelzen bekannt, an dessen Innenseite Kontakte aus Zirkoniumdioxid oder Thoriumdioxid übereinander liegend angeordnet sind, um die Höhe der Grenzschicht zwischen der Metallschmelze und der Schlacke zu messen.

Der Erfindung liegt die Aufgabe zugrunde, einen Behälter für Metallschmelzen derart zu verbessern, dass die Temperatur der darin befindlichen Schmelze möglichst genau über einen längeren Zeitraum gemessen werden kann. Der Erfindung liegt weiterhin die Aufgabe zugrunde, die bekannten Verfahren zur Grenzflächenbestimmung weiter zu verbessern.

Erfindungsgemäß wird die Aufgabe durch die Merkmale der unabhängigen Ansprüche gelöst. Vorteilhafte Ausgestaltungen sind in den Unteransprüchen angegeben. Dadurch, dass der eingangs charakterisierte Behälter eine Schutzhülle aufweist aus einem hitzebeständigen Metalloxid und Graphit und dass das geschlossene Ende der Schutzhülle mindestens 50 mm, vorzugsweise etwa 75 bis 200 mm von der Behälterwand beabstandet ist, kann die tatsächliche Temperatur der Metallschmelze gemessen werden, ohne dass eventuelle von der Tiegelwand ausgehende Kühlaffekte die Messwerte beeinflussen. Gleichzeitig ist die Schutzhülle ausreichend beständig gegenüber der aggressiven Metallschmelze, insbesondere einer Stahlschmelze und damit für einen langzeitigen Einsatz geeignet. Das Temperaturmesselement mit der Schutzhülle kann vorzugsweise im Boden des Behälters angeordnet sein, so dass es auch bei niedriger Füllhöhe zur Messung genutzt werden kann. Die Schutzhülle weist vorzugsweise im wesentlichen Aluminiumoxid und Graphit auf, wobei Aluminiumoxid insbesondere einen Anteil von etwa 20 bis etwa 80 Gew.% und Graphit einen Anteil von etwa 5 bis etwa 60 Gew.-% aufweisen kann. Die Schutzhülle kann darüber hinaus Kohlenstoff in anderer Form als Graphit enthalten und/oder weitere feuerfeste Oxide. Innerhalb der Schutzhülle ist das Temperaturmesselement, vorzugsweise ein Thermoelement, zweckmäßigerweise von einem Schutzrohr umgeben, welches vorzugsweise aus Aluminiumoxid gebildet ist. Zweckmäßig ist es, dass der äußere Durchmesser des Schutzrohres etwa 0,1 bis 1 mm kleiner ist als der innere Durchmesser der Öffnung der Schutzhülle. Die Schutzhülle kann zumindest in einem Teil ihrer Länge eine äußere konische Form mit zum Inneren des Behälters hin geringer werdendem Durchmesser aufweisen, um einen sicheren Einbau in der Behälterwand und eine ausreichende Stabilität der Schutzhülle zu ermöglichen. Des weiteren kann es zweckmäßig sein, dass an der Schutzhülle ein ins Innere des Behälters ragender Sensor zur Bestimmung einer Materialänderung beziehungsweise einer Änderung von Materialeigenschaften, insbesondere ein elektrochemischer, elektromagnetischer oder optischer Sensor oder ein Sensor zur Erfassung einer elektrischen Spannung und/oder eines elektrischen Stroms und/oder eines elektrischen Widerstands angeordnet ist, da hiermit Grenzflächenmessungen zwischen der Metallschmelze, insbesondere der Stahlschmelze und der darauf liegenden Schlacke möglich werden. Sobald der Sensor die Grenzfläche berührt, ändert sich das vom Sensor aufgenommene Signal und zeigt damit das Erreichen der Grenzfläche an. Es kann weiterhin vorteilhaft sein, dass in der Öffnung der Behälterwand zwischen der Behälterwand und der Schutzhülle eine Buchse aus feuerfestem Material, vorzugsweise aus Mullit, angeordnet ist, wobei die Buchse eine konische Form mit einem zum Inneren des Behälters hin geringer werdenden Durchmesser aufweisen kann.

Erfindungsgemäß kann der Behälter als Gießpfanne, insbesondere für Stahlschmeizen, verwendet werden. In einer Gießpfanne, einem sogenannten Tundish, ist die Metallschmelze stets bewegt, so dass eine besonders hohe Stabilität der relativ weit in den Behälter hinein ragenden Messeinrichtung erforderlich ist. Die Gießpfanne wird üblicherweise vorgeheizt, so dass auch die Messeinrichtung vorgeheizt ist. Dies führt zu sehr kurzen Reaktionszeiten, so dass das Temperaturmessgerät sehr schnell seine Gleichgewichtstemperatur mit der Schmelze erreicht und die Messung sehr schnell erfolgen kann.

Die Aufgabe wird für das eingangs charakterisierte Verfahren dadurch gelöst, dass innerhalb des unteren, in dem Behälter angeordneten Materials ein Sensor zur Bestimmung einer Materialänderung beziehungsweise einer Änderung von Materialeigenschaften, insbesondere ein elektrochemischer, elektromagnetischer oder optischer Sensor oder ein Sensor zur Erfassung einer elektrischen Spannung und/oder eines elektrischen Stroms und/oder eines elektrischen Widerstands angeordnet wird und dass das Messsignal des elektrochemischen Sensors während des Ausgießens oder Ausfließens des Behälters aus dem Behälter gemessen und eine Signaländerung bei Berührung des Sensors mit der Grenzfläche zwischen den Materialien festgestellt wird. Vorzugsweise wird die Signaländerung der Entfernung der Grenzfläche vom Boden des Behälters zugeordnet. Des weiteren kann es zweckmäßig sein, dass bei Signaländerung der Vorgang des Ausgießens oder Ausfließens beendet wird. Dazu wird das Messsignal gleichzeitig dazu benutzt, dem den Ausgieß- oder Ausfließvorgang steuernden Gerät ein Signal zu senden, aufgrund dessen der Ausgieß- oder Ausfließvorgang beendet wird.

Trotz der relativ großen Länge, mit der die Schutzhülle in die Schmelze hineinragt, weist die Vorrichtung eine ausreichende Stabilität auf, so dass eine Messung der Temperatur der Metallschmelze und eine Messung der Lage der Grenzfläche zwischen Metallschmelze und darauf aufliegender Schlacke möglich ist

Nachfolgend wird ein Ausführungsbeispiel der Erfindung anhand einer Zeichnung erläutert. In der Zeichnung zeigt
- Figur 1: einen Querschnitt durch die in der Behälterwand angeordnete Temperaturmesseinrichtung und
- Figur 2: das geschlossene Ende der Temperaturmesseinrichtung mit elektrochemischem Sensor.

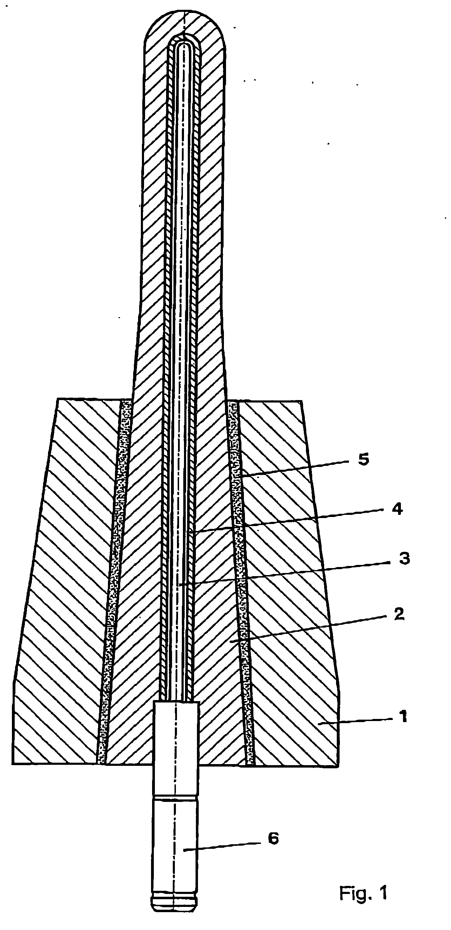

Die erfindungsgemäße Messeinrichtung weist eine Buchse 1 aus Mullit auf. Diese wird in dem Boden einer in der Zeichnung aus Übersichtsgründen nicht dargestellten Gießpfanne für Stahlschmelze angeordnet. Derartige Gießpfannen sind beispielsweise aus der bereits genannten US 6,309,442 B1 (vgl. Fig. 1, Ziff. 16) den Fachkreisen bekannt, In der Buchse 1 ist die Schutzhülle 2 angeordnet. Die Schutzhülle 2 besteht im wesentlichen aus einem Gemisch aus Aluminiumoxid und Graphit. Die Schutzhülle 2 verläuft zumindest in dem in der Buchse 1 angeordneten Teil konisch. Dies ermöglichst eine leichtere Entnehmbarkeit aus der Buchse 1 zum Austausch der Schutzhülle 2 mit dem Temperaturmesselement 3. Das Temperaturmesselement 3 ist von einem geschlossenen Aluminiumoxidrohr 4 innerhalb der Schutzhülle 2 umgeben.

Die Schutzhülle 2 ist mittels eines feuerfesten Zementes 5 in der Buchse 1 fixiert. Die Spitze der Schutzhülle 2 ragt etwa 120 mm in die Gießpfanne hinein, so dass die an der Spitze des Temperaturmesselementes 3 erfolgende Messung von Wandeinflüssen der Gießpfanne unbeeinflusst bleibt. Das dem Inneren der Gießpfanne abgewandte Ende des Temperaturmesselementes 3 weist einen sogenannten Konnektor 6 auf, der der mechanischen und elektrischen Kontaktierung des Messelementes 3 dient. Die gesamte Anordnung aus dem Mullit der Buchse 1 und der durch Zement 5 fixierten Schutzhülle 2 weist ein dichtes, pulverfreies Material auf, so dass keine Leckagen im Falle eines Bruchs eines Teils der Anordnung auftreten und Metallschmelze aus der Gießpfanne nicht auslaufen kann.

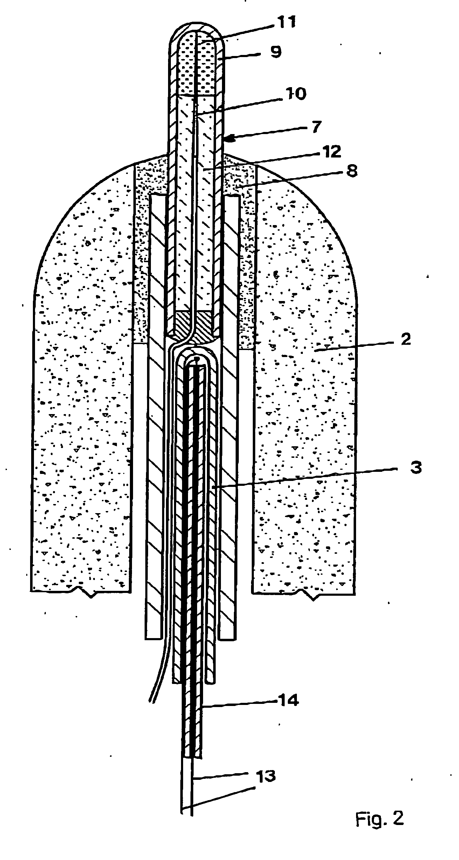

Figur 2 zeigt die in die Gießpfanne hineinragende Spitze der Schutzhülle 2 mit dem Temperaturmesselement 3 und einem elektrochemischen Sensor 7. Der elektrochemische Sensor 7 ragt aus der Schutzhülle 2 heraus und ist mit feuerfesten Zement 8 fixiert. In dem feuerfesten Zement 8 ist auch das Aluminiumoxidrohr 4 fixiert. Der elektrochemische Sensor ist ein üblicher elektrochemischer Sensor mit einem Zirkondioxydröhrchen 9 als Festelektrolytmaterial, in welchem die Referenzelektrode 10 in einem Referenzmaterial 11 und einem Füllmaterial 12 angeordnet ist. Derartige elektrochemische Sensoren sind prinzipiell bekannt, beispielsweise aus US 4,342,633.

Das Temperaturmesselement 3 ist aus einem Thermoelement gebildet, wobei die äußere Hülle aus Aluminiumoxid besteht und einer der beiden Thermodrähte 13 in einem beiderseitig offenen Aluminiumoxidrohr 14 verläuft. Sämtliche elektrischen Leitungen führen durch das Aluminiumoxidrohr 4 in den Konnektor 6 und können dort weiter verbunden werden mit einer Messeinrichtung. Die von dem elektrochemischen Sensor 7 erzeugte Spannung hängt wesentlich von der Messumgebung ab, Daher wird sofort eine Spannungsänderung erfolgen, sobald sich diese Umgebung ändert. Dies ist beispielsweise der Fall, wenn der Badspiegel der in der Gießpfanne befindlichen Stahlschmelze sinkt und der elektrochemische Sensor 7 in Kontakt kommt mit der über der Schmelze angeordneten Schlackeschicht. Dadurch ist eine exakte Bestimmung der Höhe dieser Grenzschicht zwischen Stahlschmelze und Schlacke über dem Boden der Gießpfanne möglich. Sobald der elektrochemische Sensor 7 die Grenzfläche erfasst, kann beispielsweise über ein weiteres Signal das Ausfiließen der Stahlschmelze aus der Gießpfanne durch Schließen des Ausgusses beendet werden, Grundsätzlich ist es möglich, mehrere elektrochemische Sensoren 7 auch an dem Umfang der Schutzhülle 2 in Längsrichtung beabstandet anzuordnen, so dass auch die Änderung der Badhöhe der Metallschmelze festgestellt werden kann. Statt eines elektrochemischen Sensors können auch andere Sensoren eingesetzt werden zu Feststellung der Änderung der Materialeigenschaften im Grenzbereich von Stahlschmelze und Schlacke, insbesondere elektrochemische, elektromagnetische oder optische Sensoren oder Sensoren zur Erfassung einer elektrischen Spannung und/oder eines elektrischen Stroms und/oder eines elektrischen Widerstands.

## Patentansprüche

1. Behälter für Metallschmelze mit einer in einer Öffnung einer Behälterwand angeordneten Temperaturmesseinrichtung, wobei die Temperaturmesseinrichtung eine in den Behälter ragende, an ihrem im Behälter angeordneten Ende geschlossene Schutzhülle und ein in einer Öffnung der Schutzhülle angeordnetes Temperaturmesselement aufweist, **dadurch gekennzeichnet, dass** die Schutzhülle hitzebeständiges Metalloxid und Graphit aufweist und dass das geschlossene Ende mindestens 50 mm von der Behälterwand beabstandet ist.

2. Behälter nach Anspruch 1, **dadurch gekennzeichnet, dass** das geschlossene Ende etwa 75 bis 200 mm von der Behälterwand beabstandet ist.

3. Behälter nach Anspruch 1 oder 2, **dadurch gekennzeichnet, dass** die Temperaturmesseinrichtung in dem den Boden des Behälters bildenden Teil der Behälterwand angeordnet ist.

4. Behälter nach einem der Ansprüche 1 bis 3, **dadurch gekennzeichnet, dass** die Schutzhülle im wesentlichen Aluminiumoxid, insbesondere mit einem Anteil von etwa 20 bis etwa 80 Gew.-%, und Graphit mit einem Anteil von etwa 5 bis etwa 60 Gew.-%, aufweist.

5. Behälter nach einem der Ansprüche 1 bis 4, **dadurch gekennzeichnet, dass** in der Schutzhülle ein das Temperaturmesselement umgebendes Schutzrohr aus vorzugsweise Aluminiumoxid angeordnet ist.

6. Behälter nach einem der Ansprüche 1 bis 5, **dadurch gekennzeichnet, dass** die Schutzhülle zumindest an einem Teil ihrer Länge eine äußere konische Form mit zum Inneren des Behälters hin geringer werdendem Durchmesser aufweist

7. Behälter nach einem der Ansprüche 1 bis 6, **dadurch gekennzeichnet, dass** das Temperaturmesselement ein Thermoelement ist.

8. Behälter nach einem der Ansprüche 1 bis 7, **dadurch gekennzeichnet, dass** an der Schutzhülle ein ins Innere des Behälters ragender Sensor zur Bestimmung einer Materialänderung, insbesondere ein elektrochemischer, elektromagnetischer, optischer Sensor oder ein Sensor zur Erfassung einer elektrischen Spannung und/oder eines elektrischen Stroms und/oder eines elektrischen Widerstands angeordnet ist.

9. Behälter nach einem der Ansprüche 1 bis 8, **dadurch gekennzeichnet, dass** in der Öffnung der Behälterwand zwischen Behälterwand und Schutzhülle eine Buchse aus feuerfestem Material, vorzugsweise aus Mullit, angeordnet ist, die eine konische Form mit einem zum Inneren des Behälters hin geringer werdenden Durchmesser aufweist.

10. Verwendung des Behälters nach einem der Ansprüche 1 bis 9 als Gießpfanne, insbesondere für Stahlschmelzen.

11. Verfahren zur Ermittlung einer Grenzfläche zwischen zwei übereinanderliegenden in einem Behälter angeordneten Materialien, insbesondere zwischen einer Schlackeschicht und darunter angeordneter Stahlschmelze, **dadurch gekennzeichnet, dass** innerhalb des unteren Materials ein Sensor zur Bestimmung einer Materialänderung angeordnet wird und dass das Messsignal des Sensors während des Ausgießens oder Ausfließens des Materials aus dem Behälter gemessen und eine Signaländerung bei Berührung des Sensors mit der Grenzfläche zwischen den Materialien festgestellt wird.

12. Verfahren nach Anspruch 11, **dadurch gekennzeichnet, dass** als Sensor ein elektrochemischer, elektromagnetischer, optischer Sensor oder ein Sensor zur Erfassung einer elektrischen Spannung und/oder eines elektrischen Stroms und/oder eines elektrischen Widerstands verwendet wird.

13. Verfahren nach Anspruch 11 oder 12, **dadurch gekennzeichnet, dass** die Signaländerung der Entfernung der Grenzfläche vom Boden des Behälters zugeordnet wird.

14. Verfahren nach einem der Ansprüche 11 bis 13, **dadurch gekennzeichnet, dass** bei Signaländerung der Vorgang des Ausgießens oder Ausfließens beendet wird.
